# EUROPEAN PATENT SPECIFICATION

(11) **EP 3 390 801 B1**
(45) Date of publication and mention of the grant of the patent: **17.11.2021**
(21) Application number: 16806128.1
(22) Date of filing: 06.12.2016
(51) Int. Cl.: F02M 21/02, F02F 1/24, F02P 13/00, F02B 19/18

(54) **SPARK PLUG ASSEMBLY WITH A FUEL SUPPLY LINE**
ZÜNDKERZENANORDNUNG MIT EINER KRAFTSTOFFZUFUHRLEITUNG
ENSEMBLE BOUGIE D'ALLUMAGE AVEC CONDUIT D'ALIMENTATION EN CARBURANT

(30) Priority: 18.12.2015 GB 201522342
(43) Date of publication of application: 24.10.2018
(73) Proprietor: Caterpillar Energy Solutions GmbH, 68167 Mannheim (DE)
(72) Inventor: SCHAEFER, Friedrich, 67480 Edenkoben (DE); STELLWAGEN, Karl, 67227 Frankenthal (DE)
(74) Representative: BRP Renaud & Partner mbB Rechtsanwälte Patentanwälte Steuerberater
(86) International application number: PCT/EP2016/079966
(87) International publication number: WO 2017/102466

(56) References cited:
- EP-A1- 1 936 143
- CA-A- 1 066 485
- DE-A1- 2 743 495
- DE-A1-102005 017 186

## Description

### Technical Field

The present disclosure generally relates to a spark plug assembly with a fuel supply line, a cylinder head with a fuel supply line and an internal combustion engine.

### Background

It is known to use spark plug assemblies in some internal combustion engine applications, such as gaseous fuel applications. Typically the spark plug assembly is attached to a cylinder head and extends into a combustion chamber to ignite a fuel air mixture in the combustion chamber. The spark plug assembly may comprise a pre-combustion chamber, which is filled with a fuel air mixture for example during a compression stroke of a four stroke engine. The fuel air mixture is in general ignited by a spark plug. To enhance the ignitability of the fuel air mixture in the pre-combustion chamber extra fuel may be added to the fuel air mixture. This extra fuel is supplied from a fuel supply line positioned in the cylinder head to a fuel supply line located in the spark plug assembly.

DE102013210125B5 shows a spark plug assembly with a pre-combustion chamber and a fuel supply line. The fuel supply line of the spark plug assembly, which is fluidly connected with the pre-combustion chamber ends in a recess at an outer side of the spark plug assembly, forming a fuel collecting area. The fuel collecting area is fluidly connected with a fuel supply line of the cylinder head. The connection between the supply line of the cylinder head and the fuel collecting area is sealed with sealing rings. Gaseous fuel leaking through the sealing rings either enters a surrounding of the engine or a cooling water circuit of the engine.

EP 1 936 143 A1 discloses a pre-chamber spark plug with an additive for ignition of very lean fuel air mixtures, in particular for gas engines.

CA 1 066 485 A discloses a method and apparatus for reducing the nitrogen oxide component from oxygen-poor combustion products of a combustion device.

### Summary of the Disclosure

According to an aspect of the present disclosure, a spark plug assembly has a fuel supply line and a fuel collecting area position at an outer side of the spark plug assembly. The fuel collecting area is defined on one side by a thread. The fuel collecting area is defined on the side opposite to the thread by a sealing section, and the sealing section comprises a protrusion for a sealing seat configured to seal against a protrusion formed by a cylinder head.

According to another aspect of the present disclosure, a cylinder head has a fuel supply line and a fuel collecting area, wherein the fuel collecting area is defined on one side by a thread. The cylinder head further comprises a sealing section defining a fuel collecting area at a side of the fuel collecting area away from a lower side of the cylinder head. The sealing section comprises a protrusion formed by the cylinder head.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
FIG. 1 is cut view of an exemplary internal combustion engine;
FIG. 2 is a cut view of an exemplary disclosed embodiment of a cylinder head- spark plug assembly;
Fig. 3 is a cut view of a further exemplary disclosed embodiment of a cylinder head ― spark plug assembly.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

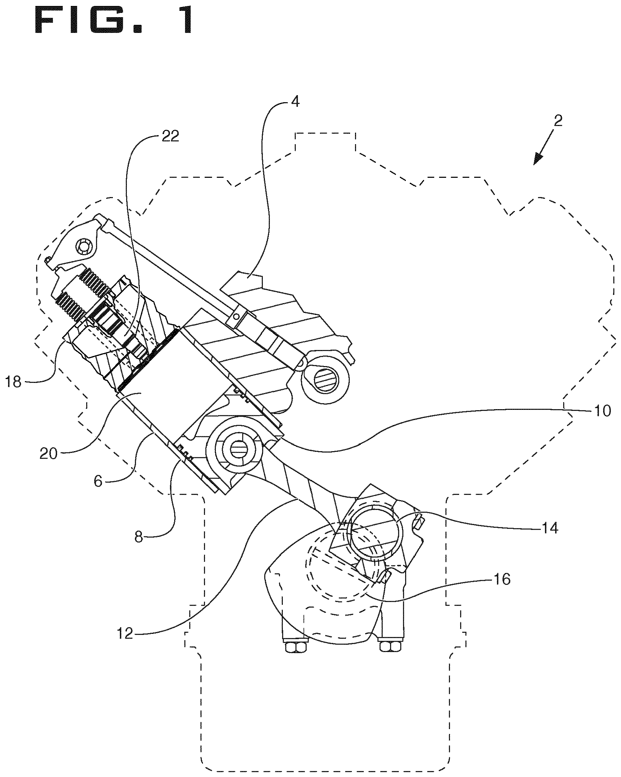

FIG. 1 shows an internal combustion engine 2 with an engine body 4. The internal combustion engine 2 may include features not shown, such as fuel systems, air systems, cooling systems, peripheries, drivetrain components, turbochargers, etc. for the purposes of the present disclosure, the internal combustion engine 2 is considered a four stroke gaseous fuel internal combustion engine. One skilled in the art will recognize, however, that the gaseous fuel internal combustion engine 2 may be any type of engine (turbine, gas, diesel, natural gas, propane, etc.) that would utilize a spark plug. Furthermore, the internal combustion engine 10 may be of any size, with any number of cylinders, and in any configuration ("V", in-line, radial etc.). The internal combustion engine 2 may be used to power any machine or other device, including locomotive applications, on highway trucks or vehicles, off-highway trucks or machines, earthmoving equipment, generators, aerospace applications, marine applications, pumps, stationary equipment, or other engine powered applications.

The engine block 4 has a plurality of cylinders 6 (one of which is illustrated in Fig. 1). The cylinder 6 may house a cylinder liner 8. A piston 10 may be slidable disposed within the cylinder liner 8 to reciprocate between the top dead center position end up bottom dead center position. A connecting rod 12 may connect the piston 10 to an eccentric crank pin 14 of a crankshaft 16.

The internal combustion engine 4 may also include a cylinder head 18 engaged with the engine block 4 to cover the cylinder 6, thereby defining with the cylinder liner 8 and the piston 10 a main combustion chamber 20.

The internal combustion engine 2 may also include a spark plug assembly 22, which is positioned in the cylinder head 18. The spark plug assembly 22 may be configured in a variety of ways. Any assembly being positioned in the cylinder head 18 to support a combustion event outside of the main combustion chamber 20, and direct the combustion into the main combustion chamber 20 may be used.

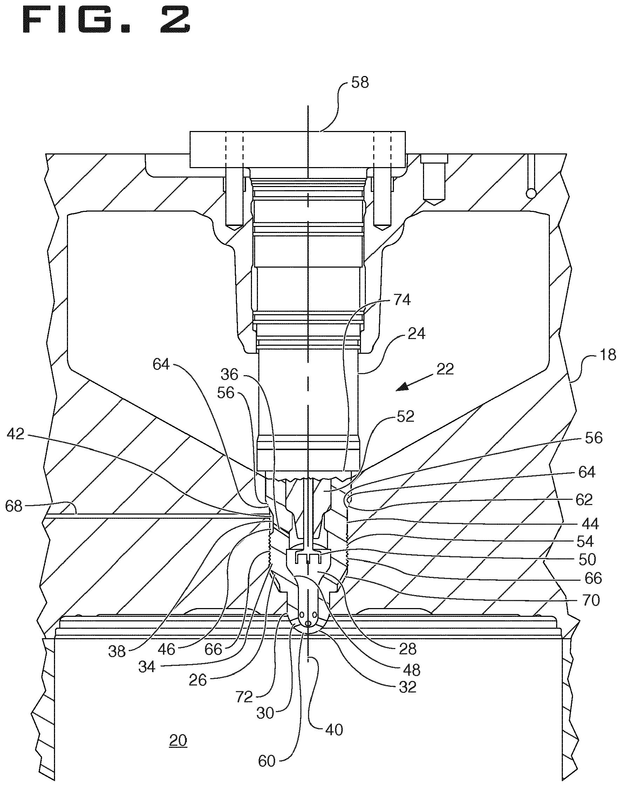

With reference to Fig. 2, the spark plug assembly 22 is shown in greater detail. The spark plug assembly 22 may extend from the cylinder head 18 into the main combustion chamber 20. In the depicted embodiment, the spark plug assembly 22 may comprise a spark plug upper part 24 and a pre-combustion chamber housing 26. The spark plug upper part 24 is connected to pre-combustion chamber housing 26. The pre-combustion chamber housing 26 defines the pre-combustion chamber 28, which is in fluid connection with the main combustion chamber 20 via transfer bores 30. The transfer bores 30 may extend through a pre-combustion chamber housing tip 32, the which pre-combustion chamber housing tip 32 is connected to a pre-combustion chamber housing base 34.

A fuel supply line 36 of the spark plug assembly 22 may extend through the pre-combustion chamber housing 26, for example through the pre-combustion chamber housing base 34. The fuel supply line 36 may fluidly connect a fuel collecting area 38 with the pre-combustion chamber 28. The fuel supply line 36 may be a bore with a constant diameter or may have different diameters along its extent. The fuel supply line 36 may be normal to a center axis 40 of the spark plug assembly 22 or may be inclined in respect to the center axis 40. A first opening 42 of the fuel supply line arranged on a outer side 44 of the spark plug assembly 22 is positioned in the fuel collecting area 38. A second opening 46 arranged on an inner side 48 of the pre-combustion chamber housing 26, open to the pre-combustion chamber 28, may be arranged near a central electrode 50 of a spark plug 52.

The fuel collecting area 38 is positioned at the outside 44 of the spark plug assembly 22, arranged circumferentially around the center axis 40, fully or partially encircling the spark plug assembly 22. The fuel collecting area 38 may be at the outside of the pre-combustion chamber housing base 34.

A thread 54 circumferential around the main axis 40 may be arranged at the outer side 44 of on the spark plug assembly 22 between a first end 60 of the spark plug assembly 22 next to the transfer bores 30 and the fuel collecting area 38. According to the invention the fuel collecting area 38 abuts the thread 54 arranged at the outside 44 of the spark plug assembly 22. For example the thread 54 is arranged at the outside of the pre-combustion chamber housing base 34.

A protrusion 56 is arranged at the outside of the spark plug assembly 22 to form a sealing seat 62 with a protrusion 64 formed by the cylinder head 18. The protrusion 56 of the spark plug assembly 22 may be positioned between a second end 58 of the spark plug assembly 22 opposite to the first end 60 of the spark plug assembly 22 and the fuel collecting area 38. For example the protrusion 56 may be formed by an end 74 of the spark plug upper part 24 abutting the pre-combustion chamber housing 26.

The cylinder head 18 comprises a fuel supply line 68 to supply fuel to the fuel collecting area 78 of the cylinder head 18. The fuel supply line 68 may have first opening at the walls of the receptacle 70 in the cylinder head 18. The receptacle 70 receiving the spark plug assembly 22 may have an opening 72 towards the main combustion chamber 20. The receptacle 70 may form a recess 90 or be plane with the neighboring areas.

The fuel collecting area 38 of the spark plug assembly 22 and the fuel collecting area 78 of the cylinder head 18 define a volume 76, which is in fluid communication with the fuel supply line 36 of the spark plug assembly 22 and the fuel supply line 68 of the cylinder head 18.

According to the invention the sealing seat 62 formed by the protrusion 64 formed in the cylinder head 18 and the protrusion 56 of the spark plug assembly 22 and the thread 54 of the spark plug assembly 22 and a corresponding thread 66 of the cylinder head seal the fuel collecting area 38 to prevent an escape of the fuel into a cooling water or a surrounding of the engine. In the event of leakage of the fuel through the threads 54, 66 the fuel may enter the main combustion chamber 20 and may be combusted there.

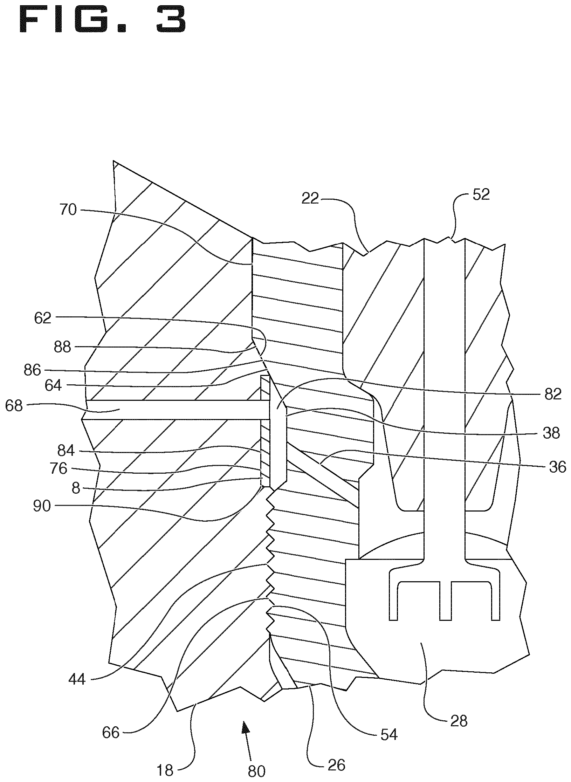

Fig. 3 shows a further embodiment of a cylinder head ― spark plug assembly 80. The cylinder-head spark plug assembly 80 includes a cylinder head 18 and a spark plug assembly 22, which may be positioned in a receptacle 70 in the cylinder head 18 and connected to the cylinder head 18.

The receptacle 70 may be axially symmetric around a central axis 40. The diameter of the receptacle 70 may decrease in different steps beginning from an outside of the cylinder head towards a main combustion chamber. The spark plug assembly 22 may be introduced into the receptacle 70 from the outside of the cylinder head 18.

The cylinder head 18 has a fuel supply line 68 which ends in an opening 82 at the inner walls 84 of the receptacle 70. The fuel supply line 68 may be horizontally and formed as a bore as shown in Fig. 3 or may be arranged inclined to the center axis 40 or curved. Further the fuel supply line 68 may have different diameters.

A fuel collecting area 78 is formed by the inner walls 84 of the receptacle 70 next to the opening 82 of the fuel supply line 68. In the embodiment depicted in Fig. 3 the part of the inner walls 84 defining the fuel collecting area 78 are parallel to a central axis 40. The fuel collecting area 78 is arranged as a circular band circumferential around the central axis 40.

Next to the fuel collecting area 78 the inner walls 84 of the receptacle 70may form a circumferential plane 86 directed to a upper end of the spark plug assembly 22. The upper end of the spark plug assembly 22 is opposite of the lower part of the spark plug assembly 22 which is next to transfer bores of the spark plug assembly 22.

The plane 86 may be part of a protrusion 64 of the cylinder head 18 and may form with a plane at the outside of the spark plug assembly a sealing seat, which defines the fuel collecting area.

The spark plug assembly 22 may have a pre-combustion chamber housing 26 and an upper part 24 of the spark plug assembly 22. The pre-combustion chamber housing 26 may be attached to the upper part 24 of the spark plug assembly 22. A fuel supply line 36 may extend from the pre combustion chamber 28 to a fuel collecting area 38 at the outside of the spark plug assembly 22. The fuel collecting area 38 may have a recess 88 as shown in Fig. 3 and form a volume 76 between the cylinder head 18 and the spark plug assembly 22. The volume 76 may be defined by the fuel collection area 38 of the spark plug assembly 22, the fuel collection area 78 of the cylinder head 18, the thread 66 of the cylinder head 18 meshing with the thread 54 of the spark plug assembly 22 and the sealing seat 62 formed by the spark plug assembly 22 and the cylinder head 18. The volume 76 may encircle the spark plug assembly 22 around the central axis 40. The fuel supply line 68 of the cylinder head 18 may be in fluid communication with the fuel supply line 36 of the spark plug assembly 22 via the volume 76.

### Industrial Applicability

To mount a spark plug assembly 22 into a receptacle 70 in the cylinder head 18, the spark plug assembly 22 is inserted into the receptacle 70 with the pre-combustion chamber housing 26 of the spark plug assembly 22 directed to the main combustion chamber 20. The spark plug assembly 22 will be rotated around the central axis 40, so the thread 54 of the spark plug assembly 22 meshes with the thread 66 of the cylinder head 18 connecting the spark plug assembly 22 with the cylinder head 18. By meshing the two threads 54, 66 the protrusion 56 of the spark plug assembly 22 may be pressed onto the protrusion 64 of the cylinder head 18 forming the sealing seat 62 and sealing the volume 76 between the fuel collecting area 38 of the spark plug assembly 22 and the fuel collecting area 78 of the cylinder head 18.

The other side of the volume 76 may be sealed by the two meshing threads 54, 66.

In a further step the spark plug 52 of the spark plug assembly 22 may be connected to a spark plug controller and a power source to create an ignition spark in the pre combustion chamber 28.

In operation an amount of extra fuel may be supplied through the fuel supply line 68 of the cylinder head 18 to the volume 76 during the compression stroke. As this volume 76 may be in fluid connection with the pre-combustion chamber 28 the supplied fuel will be delivered to the fuel air mixture in the pre-combustion chamber 28 trough the fuel supply line 36 of the spark plug assembly 22. In the pre-combustion chamber 28 this enriched fuel air mixture may be ignited and combusted.

## Claims

1. A spark plug assembly (22) with a fuel supply line (36) and a fuel collecting area (38) positioned at an outer side (44) of the spark plug assembly (22),
wherein the fuel collecting area (38) is defined on one side by a thread (54),
the spark plug assembly being **characterised in that** the fuel collecting area (38) is defined on the side opposite to the thread (54) by a sealing section (56), and
wherein the sealing section (56) comprises a protrusion for a sealing seat (62) configured to seal against a protrusion formed by a cylinder head (18).

2. The spark plug assembly (22) of the preceding claim comprising a pre-combustion chamber (28) fluidly connected to the fuel supply line (36).

3. The spark plug assembly (22) of any one of the preceding claims comprising a spark plug (52).

4. The spark plug assembly (22) of any one of the preceding claims, wherein the fuel collecting area (38) extends circumferentially around a central axis (40) of the spark plug assembly (22) at least 180°.

5. The spark plug assembly (22) of any one of the preceding claims with a lower end (60) to be positioned in a combustion chamber (20) in operational state and the thread (54) defining a side of the fuel collecting area (38), which is facing the lower end (60).

6. The spark plug assembly (22) of any one of the preceding claims, wherein the fuel collecting area (38) comprises a recess (88), which is fluidly connected to the fuel supply line (36).

7. A cylinder head (18) with a fuel supply line (68) and a fuel collecting area (78), wherein the fuel collecting area (78) is defined on one side by a thread (66), the cylinder head is **characterised by** further comprising a sealing section (64) defining the fuel collecting area (78) at a side of the fuel collecting area (78) away from a lower side of the cylinder head (18), the sealing section comprising a protrusion (64) formed by the cylinder head, the protrusion (64) being configured to seal against the protrusion of the spark plug assembly of any one of claims 1 to 6.

8. A cylinder head spark plug assembly (80) comprising:
a spark plug assembly (22) of any one of claims 1 to 6; and
a cylinder head (18) of claim 7,
wherein a volume (76) defined by the fuel collecting area (38) of the spark plug assembly (22) and the fuel collecting area (78) of the cylinder head (18) is in fluid connection with the pre-combustion chamber (20), and the thread of the spark plug assembly meshes with the thread of the cylinder head and the protrusion of the spark plug assembly seals against the protrusion formed by the cylinder head.

9. An internal combustion engine (2) comprising a cylinder head (18) of claim 7.

10. An internal combustion engine (2) comprising a cylinder head spark plug assembly (80) of claim 8.

## Patentansprüche

1. Zündkerzenanordnung (22) mit einer Kraftstoffzufuhrleitung (36) und einem Kraftstoffsammelbereich (38), der an einer Außenseite (44) der Zündkerzenanordnung (22) positioniert ist,
wobei der Kraftstoffsammelbereich (38) auf einer Seite durch ein Gewinde (54) definiert ist,
wobei die Zündkerzenanordnung **dadurch gekennzeichnet ist, dass** der Kraftstoffsammelbereich (38) auf der dem Gewinde (54) gegenüberliegenden Seite durch einen Dichtungsabschnitt (56) definiert ist, und
wobei der Dichtungsabschnitt (56) einen Vorsprung für einen Dichtsitz (62) umfasst, der konfiguriert ist, um gegen einen Vorsprung abzudichten, der durch einen Zylinderkopf (18) gebildet wird.

2. Zündkerzenanordnung (22) nach dem vorhergehenden Anspruch, umfassend eine Vorbrennkammer (28), die mit der Kraftstoffzufuhrleitung (36) in Fluidverbindung steht.

3. Zündkerzenanordnung (22) nach einem der vorhergehenden Ansprüche, umfassend eine Zündkerze (52).

4. Zündkerzenanordnung (22) nach einem der vorhergehenden Ansprüche, wobei sich der Kraftstoffsammelbereich (38) in Umfangsrichtung um mindestens 180° um eine Mittelachse (40) der Zündkerzenanordnung (22) erstreckt.

5. Zündkerzenanordnung (22) nach einem der vorhergehenden Ansprüche mit einem unteren Ende (60), das im Betriebszustand in einer Brennkammer (20) zu positionieren ist, und wobei das Gewinde (54) eine Seite des Kraftstoffsammelbereichs (38) definiert, die dem unteren Ende (60) zugewandt ist.

6. Zündkerzenanordnung (22) nach einem der vorhergehenden Ansprüche, wobei der Kraftstoffsammelbereich (38) eine Aussparung (88) umfasst, die mit der Kraftstoffzufuhrleitung (36) in Fluidverbindung steht.

7. Zylinderkopf (18) mit einer Kraftstoffzufuhrleitung (68) und einem Kraftstoffsammelbereich (78), wobei der Kraftstoffsammelbereich (78) auf einer Seite durch ein Gewinde (66) definiert ist, wobei der Zylinderkopf **dadurch gekennzeichnet ist, dass er** ferner umfasst:
einen Dichtungsabschnitt (64), der den Kraftstoffsammelbereich (78) auf einer von einer unteren Seite des Zylinderkopfs (18) abgewandten Seite des Kraftstoffsammelbereichs (78) definiert, wobei der Dichtungsabschnitt einen Vorsprung (64) umfasst, der durch den Zylinderkopf gebildet wird, wobei der Vorsprung (64) konfiguriert ist, um gegen den Vorsprung der Zündkerzenanordnung nach einem der Ansprüche 1 bis 6 abzudichten.

8. Zylinderkopf-Zündkerzenanordnung (80), umfassend:
eine Zündkerzenanordnung (22) nach einem der Ansprüche 1 bis 6; und
einen Zylinderkopf (18) nach Anspruch 7,
wobei ein Volumen (76), das durch den Kraftstoffsammelbereich (38) der Zündkerzenanordnung (22) und den Kraftstoffsammelbereich (78) des Zylinderkopfs (18) definiert ist, mit der Vorbrennkammer (20) in Fluidverbindung steht, und das Gewinde der Zündkerzenanordnung mit dem Gewinde des Zylinderkopfs in Eingriff steht und der Vorsprung der Zündkerzenanordnung gegen den durch den Zylinderkopf gebildeten Vorsprung abdichtet.

9. Brennkraftmaschine (2), umfassend einen Zylinderkopf (18) nach Anspruch 7.

10. Brennkraftmaschine (2), umfassend eine Zylinderkopf-Zündkerzenanordnung (80) nach Anspruch 8.

## Revendications

1. Ensemble de bougie d'allumage (22) avec une conduite d'alimentation en carburant (36) et une zone de récupération de carburant (38) positionnée au niveau d'un côté externe (44) de l'ensemble de bougie d'allumage (22),
dans lequel la zone de récupération de carburant (38) est définie sur un côté par un filetage (54),
l'ensemble de bougie d'allumage étant **caractérisé en ce que** la zone de récupération de carburant (38) est définie sur le côté opposé au filetage (54) par une section d'étanchéité (56), et
dans lequel la section d'étanchéité (56) comprend une saillie pour un siège d'étanchéité (62) configurée pour se sceller contre une saillie formée par une culasse (18).

2. Ensemble de bougie d'allumage (22) selon la revendication précédente comprenant une chambre de pré-combustion (28) connectée de façon fluidique à la conduite d'alimentation en carburant (36).

3. Ensemble de bougie d'allumage (22) selon l'une quelconque des revendications précédentes comprenant une bougie d'allumage (52).

4. Ensemble de bougie d'allumage (22) selon l'une quelconque des revendications précédentes, dans lequel la zone de récupération de carburant (38) s'étend circonférentiellement autour d'un axe central (40) de l'ensemble de bougie d'allumage (22) au moins à 180°.

5. Ensemble de bougie d'allumage (22) selon l'une quelconque des revendications précédentes avec une extrémité inférieure (60) destinée à être positionnée dans une chambre de combustion (20) dans un état opérationnel et le filetage (54) définissant un côté de la zone de récupération de carburant (38), qui fait face à l'extrémité inférieure (60).

6. Ensemble de bougie d'allumage (22) selon l'une quelconque des revendications précédentes, dans lequel la zone de récupération de carburant (38) comprend un évidement (88), qui est connecté de façon fluidique à la conduite d'alimentation en carburant (36).

7. Culasse (18) avec une conduite d'alimentation en carburant (68) et une zone de récupération de carburant (78), dans laquelle la zone de récupération de carburant (78) est définie sur un côté par un filetage (66), la culasse est **caractérisée par** comprenant en outre
une section d'étanchéité (64) définissant la zone de récupération de carburant (78) au niveau d'un côté de la zone de récupération de carburant (78) à l'écart d'un côté inférieur de la culasse (18), la section d'étanchéité comprenant une saillie (64) formée par la culasse, la saillie (64) étant configurée pour se sceller contre la saillie de l'ensemble de bougie d'allumage selon l'une quelconque des revendications 1 à 6.

8. Ensemble de bougie d'allumage de culasse (80) comprenant :
un ensemble de bougie d'allumage (22) selon l'une quelconque des revendications 1 à 6 ; et
une culasse (18) selon la revendication 7,
dans lequel un volume (76) défini par la zone de récupération de carburant (38) de l'ensemble de bougie d'allumage (22) et la zone de récupération de carburant (78) de la culasse (18) est en connexion fluidique avec la chambre de pré-combustion (20), et le filetage de l'ensemble de bougie d'allumage s'engrène avec le filetage de la culasse et la saillie de l'ensemble de bougie d'allumage se scelle contre la saillie formée par la culasse.

9. Moteur à combustion interne (2) comprenant une culasse (18) selon la revendication 7.

10. Moteur à combustion interne (2) comprenant un ensemble de bougie d'allumage de culasse (80) selon la revendication 8.
